# EUROPEAN PATENT SPECIFICATION

(11) **EP 2 960 076 B1**
(45) Date of publication and mention of the grant of the patent: **30.05.2018**
(21) Application number: 14754769.9
(22) Date of filing: 04.02.2014
(51) Int. Cl.: B60C 19/00, B60C 15/06, B60C 13/00, B60C 3/04

(54) **PNEUMATIC TIRE**
LUFTREIFEN
PNEUMATIQUE

(30) Priority: 20.02.2013 JP 2013030808
(43) Date of publication of application: 30.12.2015
(73) Proprietor: Bridgestone Corporation, Tokyo 104-8340 (JP)
(72) Inventor: WATANABE, Toshiyuki, Tokyo 187-8531 (JP)
(74) Representative: Oxley, Robin John George
(86) International application number: PCT/JP2014/000581
(87) International publication number: WO 2014/129131

(56) References cited:
- EP-A1- 1 108 567
- WO-A1-2012/164960
- JP-A- H0 853 003
- JP-A- 2004 082 387
- JP-A- 2007 083 914
- JP-A- 2011 073 511
- US-A1- 2003 051 789

## Description

### TECHNICAL FIELD

This disclosure relates to a pneumatic tire.

### BACKGROUND

It is known that a pneumatic tire, due to structures thereof, exhibits a cavity resonance phenomenon caused by the length of a circular tube inside the tire. Further, a pneumatic tire, regardless of the type, generates noise having cavity resonance frequency in the range of 200 Hz to 270 Hz according to a circumference length thereof, and said noise is a main cause for unpleasant vehicle-interior noise.

As described above, since air resonance in the interior of the tire is a generation factor of the vehicle-interior noise, a method for absorbing noise in the interior of a tire is effective as an improvement method. Examples of conventionally proposed methods include, as disclosed in PTL 1, a technique of adhering short fibers to a tire inner peripheral surface.

In recent years, from the viewpoint of improving fuel efficiency of automobiles, there is a demand for a weight reduction of tires. To achieve weight reduction of tires, one of the following should be reduced: gauge of side portions (thickness); height of bead filler; number of carcass plies; height of carcass ply turn-up; and the like.

### CITATION LIST

### Patent Literature

PTL 1: JP2004082387A. Attention is also drawn to the disclosures of WO2012/164960, which shows a tire according to the preamble of claim 1 and EP 1,108,567.

### SUMMARY

### (Technical Problem)

However, reducing the gauge of side portions (thickness), the height of bead filler, the number of plies, the height of carcass ply turn-up, and the like, to achieve tire weight reduction, causes a decrease in the rigidity of the tire, and results in a decrease of steering stability and a decrease in strength
against side cuts such as pinch cuts.

It could therefore be helpful to provide a pneumatic tire that enables suppressing at least one of the decrease in steering stability and the decrease in side cut resistance, and reducing cavity resonance sound, without greatly increasing tire weight.

### (Solution to Problem)

The pneumatic tire according to the invention has an aspect ratio AS of 55 % or less, wherein short fibers are fixed to a region of a tire inner peripheral surface including, at least in a part thereof, a position of the tire inner peripheral surface corresponding to a sidewall portion maximum width position, and a tire thickness in the sidewall portion maximum width position is BW × (1 - AS) or less in a relation between bead core width BW and the aspect ratio AS.

As used herein, "width" and "width direction" each refer to distance or length in tire width direction, and width direction of a tire. For the pneumatic tire described herein, the "aspect ratio", dimensions of each portion, and the like are measured when the tire is assembled with an applicable rim, with prescribed internal pressure applied and no load applied. The above "applicable rim" refers to a standard rim ("Design Rim" in the YEAR BOOK of TRA below, and "Measuring Rim" in the STANDARDS MANUAL of ETRTO below) specified by the standards below in accordance with tire size, "prescribed internal pressure" refers to air pressure specified by the standards below in accordance with the maximum load capability, and the "maximum load capability" refers to the maximum mass that the tire is allowed to bear according to the standards below. The standards are determined by valid industrial standards for the region in which the tire is produced or used, such as the "Year Book" of "THE TIRE AND RIM ASSOCIATION, INC. (TRA)" in the United States of America, "The European Tire and Rim Technical Organization (ETRO)" in Europe, and the "JATMA YEAR BOOK" of "the Japan Automobile Tire Manufacturers Association (JATMA)" in Japan.

Generally, if the thickness of the sidewall portion maximum width position is BW × (1 - AS) or less, the rigidity of the side portion is low, and therefore performance is insufficient in terms of steering stability and side cut resistance. In the disclosure, short fibers are fixed to this portion, and rigidity is enhanced by the adhesive layer formed by the adhesive used for fixing, and as a result, it is possible to prevent a decrease in steering stability and side cut resistance. Further, these short fibers are disposed on the inner surface of the air chamber formed when assembling the tire to the rim and they exhibit a noise-absorbing effect to suppress the generation of cavity resonance sound. The above effect can surely be obtained with a pneumatic tire with an aspect ratio of 55 % or less.

In one embodiment of the pneumatic tire described herein, the short fibers are fixed to at least a part of a region of a tire inner peripheral surface from the position corresponding to the sidewall portion maximum width position to the outer side end in tire radial direction of the bead core, and bead filler height is 25 mm or less.

As used herein, "height" refers to the distance or length in tire radial direction.

By setting the bead filler height to 25 mm or less, it is possible to contribute to tire weight reduction. However, by doing so, a decrease in steering stability and side cut resistance may be caused. Therefore, in such case, it is preferable to fix short fibers to the region from the sidewall portion maximum width position to the bead side to enhance rigidity. Since the contribution on steering stability of the region from the sidewall portion maximum width position to the bead side is particularly large, it is desirable that the rigidity in these portions is enhanced.

Another embodiment of the pneumatic tire disclosed herein comprises, in a tread portion, a belt consisting of one or more belt layers, wherein the short fibers are fixed to at least a part of a region of the tire inner peripheral surface from the sidewall portion maximum width position to the outer side end in tire width direction of the belt, and minimum tire thickness in the region is 10 mm or less.

As used herein, "tire thickness" refers to the tire width direction cross section of the tire assembled with an applicable rim, with prescribed internal pressure applied and no load applied, and refers to the tire thickness measured in the position or region of the tire inner peripheral surface to be measured, in a direction perpendicular to the tire inner peripheral surface.

By setting the minimum tire thickness in the region from the maximum width position to the outer side end in the tire width direction of the belt to 10 mm or less, it is possible to contribute to tire weight reduction. However, by doing so, a decrease in side cut resistance and steering stability may be caused. Therefore, in such case, it is preferable to fix short fibers to the region from the maximum width position to the outer side end in the width direction of the belt, to enhance rigidity. Since the contribution on side cut resistance of the region from the sidewall portion maximum width position to the outer side end in the width direction of the belt is particularly large, it is desirable that the rigidity in these portions is enhanced.

### (Advantageous Effect)

It is possible to provide a pneumatic tire that enables suppressing the decrease in steering stability and side cut resistance, and reducing cavity resonance sound, without increasing tire weight.

### BRIEF DESCRIPTION OF THE DRAWINGS

In the accompanying drawings:
FIG. 1 is a cross sectional view in the tire width direction of a pneumatic tire described herein according to one embodiment;
FIG. 2 is a cross sectional view in the tire width direction of a pneumatic tire described herein according to one embodiment in the vicinity of a bead portion;
FIG. 3 is a schematic diagram showing a device for measuring cavity resonance and the principle thereof;
FIG. 4 is a diagram showing measurement results of cavity resonance for tires of example 1, and comparative examples 1 and 2;
FIG. 5 is a schematic diagram showing a device for testing side cut resistance.

### DETAILED DESCRIPTION

We focused on the fact that, in a tire with short fibers fixed to the tire inner peripheral surface to suppress cavity resonance inside the tire, particularly because of existence of the adhesive layer fixing short layers, the rigidity in the short fiber-fixed portion increases, and discovered that, particularly for pneumatic tires with an aspect ratio of 55 % or less, the decrease in rigidity as well as the decrease in steering stability and side cut resistance which may result therefrom which are caused by reducing the gauge of side portions (thickness), the height of the bead filler, the number of carcass plies, the height of carcass ply turn-up, and the like for the purpose of tire weight reduction, can be reduced by disposing the fixed portion, and completed the disclosure.

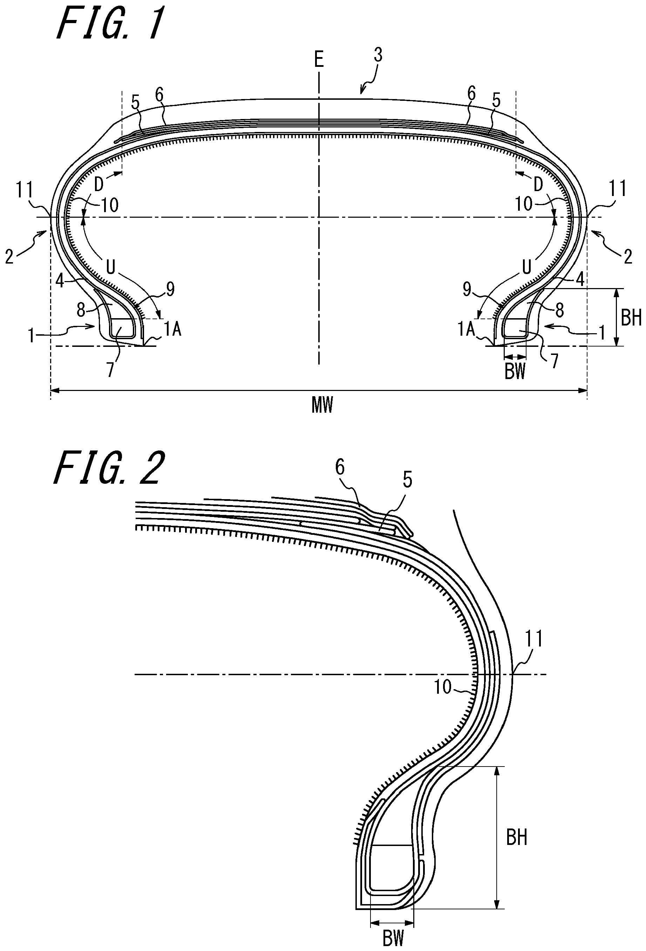

The following describes the disclosure in detail with reference to the drawings. FIG. 1 is a cross sectional view in the tire width direction of a pneumatic tire described herein according to one embodiment. The pneumatic tire shown in FIG. 1 has a pair of bead portions 1; a pair of sidewall portions 2; a tread portion 3 continued to the respective sidewall portions 2; a carcass 4 consisting of one carcass ply extending in a toroidal shape across the pair of bead portions 1 for reinforcing the bead portions 1, the sidewall portions 2 and the tread portion 3; a belt 5 consisting of two belt layers disposed on the outer side in the tire radial direction of the carcass 4 in the tread portion 3; a single belt reinforcing layer 6 disposed on the outer side in the tire radial direction of the belt 5; a bead filler 8 disposed on the outer side in the tire radial direction of a bead core 7 embedded in each of the bead portions 1; and an inner liner 9 disposed on the tire inner peripheral surface side of the carcass 4.

FIGs. 1 and 2 show a tire assembled with an applicable rim, with prescribed internal pressure applied and no load applied.

The carcass 4 of the example shown in FIG. 1 consists of a single carcass ply and has a main body portion extending in a toroidal shape across the pair of bead cores 7 and a turn-up portion wound around each bead core 7 from the inner side toward the outer side in the tire widthwise direction then toward the outer side in the tire radial direction. The number of plies and the structure of the carcass 4, however, are not limited to those in the aforementioned example in the pneumatic tire described herein. The bead filler 8 is disposed between the main body portion and each turn-up portion of the carcass in the pneumatic tire of the example shown in FIG. 1.

In the tread portion 3 of the pneumatic tire of the example shown in FIG. 1, the belt 5 consisting of two belt layers is disposed on the outer side in the tire radial direction of a crown portion of the carcass 4. The belt layers are generally steel cord layers coated with rubber and extending to be inclined with respect to the tire equatorial plane E. The two belt layers of the example shown in FIG. 1 are laminated such that steel cords constituting one belt layer intersect steel cords constituting the other belt layer with respect to the tire equatorial plane E, to together constitute the belt 5. Although the belt 5 shown in FIG. 1 consists of two belt layers, the number of the belt layers constituting the belt 5 may be three or more in the pneumatic tire disclosed herein. Although the pneumatic tire shown in FIG. 1 has the single belt reinforcing layer 6 without a steel cord, disposed on the outer side in the tire radial direction of the belt 5, the pneumatic tire described herein may lack the belt reinforcing layer 6 or may have two or more belt reinforcing layers 6.

In the pneumatic tire described herein, short fibers 10 described later are fixed to a region including, at least in a part thereof, a position corresponding to a maximum width position 11 where the sidewall portion of the tire inner peripheral surface has a maximum width MW. By applying short fibers to at least a part of the tire inner peripheral surface as described above, cavity resonance can be reduced.

The tire thickness (hereinafter also referred to as "gauge") of the maximum width position 11 in the sidewall portion of the pneumatic tire described herein, in a relation between bead core width BW and tire aspect ratio AS, is BW × (1 - AS) or less. The aspect ratio AS of the pneumatic tire described herein is 0.55 (55 %) or less, and more preferably 0.35 to 0.55. With an aspect ratio AS of 55 % or less, the rigidity improving effect obtained by applying the short fiber-fixed part described later is surely obtained. By setting the gauge of the sidewall portion to a thickness that satisfies the above expression, the tire weight before fixing short fibers can be made sufficiently light. However, if left this way, a decrease in steering stability and side cut resistance resulting from a decrease in the rigidity of the tire may be caused, and therefore, it is necessary to apply a short fiber-fixed part in at least a part of the region of the tire inner peripheral surface including at in least a part thereof a position in the tire inner peripheral surface corresponding to the sidewall portion maximum width position 11.

The bead filler height BH of the pneumatic tire described herein is preferably 25 mm or less, and particularly preferably 15 mm to 25 mm. By setting the bead filler height to 25 mm or less, the tire weight before fixing short fibers can surely be reduced compared to a commercially available tire. However, if left this way, there is a risk of the rigidity in the vicinity of beads of the tire decreasing, and causing a decrease particularly in steering stability. In such case, it is preferable to apply a short fiber-fixed part to at least a part of the region of the tire inner peripheral surface (region U in FIG. 1) from the position of the tire inner peripheral surface corresponding to the sidewall portion maximum width position 11 to the outer side end in the tire radial direction of the bead core.

In the pneumatic tire described herein, the minimum tire thickness in the region from the sidewall portion maximum width position 11 to the outer side end in the tire width direction of the belt 5 (region D in FIG. 1) is preferably 10 mm or less, and particularly preferably 6 mm to 10 mm. By setting the minimum tire thickness in this region to 10 mm or less, the tire weight before fixing short fibers can surely be reduced compared to a commercially available tire. However, if left this way, a decrease may be caused particularly in the side cut resistance of the tire, and therefore, in such case, it is necessary to apply a short fiber-fixed part in at least a part of the tire inner peripheral surface of the region D.

As shown in FIG. 2, the number of carcass plies at the sidewall portion maximum width position 11 of the pneumatic tire described herein is preferably three or less. By reducing the number of plies, the tire weight can be reduced.

In the pneumatic tire of the example shown in FIG. 2, short fibers 10 are fixed to the tire inner peripheral surface of the tread portion 3 in order to further enhance the cavity resonance sound reduction effect. However, if it is desired to suppress the increase in weight, the fixing of short fibers to this portion may be omitted.

Examples of the short fibers 10 used in the short fiber-fixed layers include short fibers of organic synthetic fibers, inorganic fibers, regenerated fibers, natural fibers and the like. Examples of organic synthetic fibers include fibers made of: polyolefin such as polyethylene, polypropylene and polybutylene; aliphatic polyamide such as nylon; aromatic polyamide such as Kevlar; polyester such as polyethylene terephthalate, polyethylene naphthalate, polyethylene succinate, polymethyl methacrylate; syndiotactic 1,2-polybutadiene; acrylonitrile-butadine-styrene copolymer; polystyrene; and copolymers of these polymers. Examples of inorganic fibers include carbon fiber, glass fiber and the like. Examples of regenerated fibers include rayon, cupro and the like. Examples of natural fiber include cotton, silk, wool and the like.

In the pneumatic tire described herein, the short fibers are disposed preferably at a density of 500 fibers/cm² or more in the region where the short fibers are fixed to the tire inner peripheral surface. By doing so, a reduction effect of cavity resonance sound can surely be obtained. From the viewpoint of obtaining an even better cavity resonance sound reduction effect, the short fibers are disposed more preferably at a density of 1000 fibers/cm² or more, and particularly preferably at a density of 1,000 fibers/cm² or more and 20,000 fibers/cm² or less.

In another preferable example of the pneumatic tire described herein, the average length of the short fibers is 0.5 mm to 10 mm. By setting the length of short fibers to 0.5 mm or more, the effect of reducing the cavity resonance sound can be sufficiently obtained. On the other hand, by setting the average length of short fibers to 10 mm or less, it is possible to avoid the problem of tangling between short fibers which leads to an insufficient expression of noise-absorbing effect. From the same viewpoint, the average length of the short fibers is particularly preferably 2 mm to 8 mm.

The area where short fibers are fixed is preferably 25 % or more, particularly preferably 50 % or more, and further preferably 70 % or more of the area of the tire inner peripheral surface. By setting the area ratio of the area where short fibers are fixed to 50 % or more, the cavity resonance sound can surely be reduced.

In another preferable example of the pneumatic tire described herein, the average diameter of the short fibers is 1 µm to 500 µm. This way, thread breakage in a production process of the short fibers is suppressed, and a decrease in productivity of the short fibers can be suppressed. Further, it is possible to suppress the increase in rolling resistance caused by the increase in tire weight, and suppress the decrease in the fuel consumption rate of a vehicle on which the tires are mounted.

In the pneumatic tire described herein, a ratio (L/D) of length (L) with respect to diameter (D) of the short fibers is preferably in the range of 5 ≤ L/D ≤ 2000. With a ratio (L/D) of length with respect to diameter of less than 5, the effect of reducing cavity resonance sound becomes small. On the other hand, with a ratio (L/D) of length with respect to diameter exceeding 2000, tangling may be caused between the short fibers and lead to an insufficient expression of noise-absorbing effect.

In the pneumatic tire of the present invention, it is preferable that the region where the short fibers are fixed consists of a plurality of short fiber-fixed layers, and that the plurality of short fiber-fixed layers are fixed independent of each other. By noncontinuously disposing the region where short fibers are fixed, even if the short fiber-fixed layer comes off, the area of coming off is kept very small, and the effect of suppressing cavity resonance can be maintained.

Production of the pneumatic tire described herein, comprises an applying process of applying an adhesive to a region including, at least in a part thereof, a position corresponding to a maximum width position 11 where the sidewall portion has a maximum width MW, and an adhering step of adhering short fibers to the part where an adhesive is applied. The production is characterized in that short fiber-fixed layers are formed in the tire inner peripheral surface with short fibers and an adhesive. With this production method, a pneumatic tire capable of suppressing generation of cavity resonance sound can be effectively produced.

The adhesive to be used is not limited to a particular type and any adhesive can be used. A polyurethane resin adhesive, an acrylic resin adhesive, an epoxy resin adhesive and the like are suitably used. The thickness of the formed adhesive layer is also not particularly limited as long as it does not exceed the length of short fibers. A thickness of 50 µm to 500 µm is preferable.

In the method for producing the pneumatic tire described herein, the short fibers 10 are preferably adhered to the tire inner peripheral surface by electrostatic flocking after the applying process i.e. during the adhering process. The short fibers 10 can be adhered to the tire inner peripheral surface by various methods. However, by applying an electrostatic flocking process, the short fibers 10 can easily be fixed to the tire inner peripheral surface in a state where the short fibers 10 stand upright thereon, and a pneumatic tire that enables obtaining a noise-absorbing effect can be effectively produced.

Electrostatic flocking is a processing technique of electrically charging short fibers and attaching the short fibers, by electrostatic force, perpendicularly to an object with an adhesive applied thereto in advance. Therefore, it enables uniformly attaching short fibers to an object surface having a complicated shape and is suitable for attaching the short fibers 10 to a tire inner peripheral surface having a three-dimensional curvature.

The pneumatic tire described herein is generally assembled with a rim, and as a tire-rim assembly, it is mounted on a desired vehicle for use. In order to further enhance the effect of reducing cavity resonance sound, the above short fibers can be fixed to a part of or the whole rim.

### EXAMPLES

Although the disclosure will be described below in further detail with reference to examples, the disclosure is not intended to be limited in any way to the following examples.

### <Examples 1 to 3>

Tires such as shown in Table 1, with reduced tire weight were prepared by reducing the gauge of the sidewall portion maximum width position and the above region D, as well as bead filler height BH from commercially available tires of size 255/35R20. Short fibers made of nylon were fixed to the whole inner peripheral surface of the weight reduced tire using an adhesive. The short fibers in the short fiber-fixed region were set as follows: density: 2,000 short fibers/cm²; average length: 4 mm; average diameter: 50 µm; and short fiber-fixed area ratio: 100 %. As an adhesive, a polyurethane resin adhesive was used, and the average film thickness of the formed adhesive layer was 250 µm.

Other than that the short fibers were disposed only in the region U, the sample tire for example 2 was produced in the same way as example 1.

Other than that the short fibers were disposed only in the region U, the sample tire for example 3 was produced in the same way as example 1.

### <Examples 1 and 2>

A commercially available tire of size 255/35R20 which is shown in Table 1 was used as comparative example 1. Other than that short fibers are not fixed at all, the sample tire for comparative example 2 was produced in the same way as the examples.

For each tire of examples 1 to 3 and comparative examples 1 and 2, cavity resonance, steering stability, and side cut resistance were evaluated as follows.

### <Cavity Resonance>

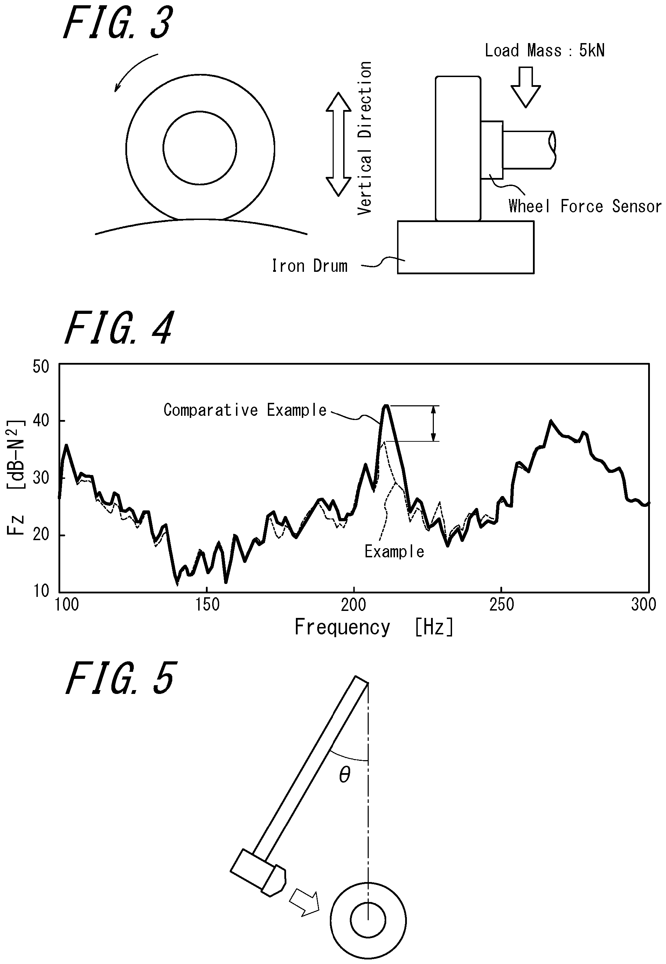

Each sample tire was assembled with a rim of 8.5J-20, and under the condition of filling internal pressure of 260 kPa, tire load mass of 5.0 kN, and speed of 80 km/h, they were rolled using a drum tester comprising an iron drum having an iron plate surface with a diameter of 1.7 m which is shown in FIG. 3, the vertical tire axial force generated was measured and evaluated using a wheel force sensor. The frequency spectrum of the results is shown in Fig. 4. In the spectrum of FIG. 4, it is shown that, as the peak of 210 Hz is lower, more cavity resonance sound of the tire has been reduced. From the spectrum of FIG. 4, the reduction amount (dB) in the peak of each sample tire compared to the tire of comparative example 1 was obtained.

### <Steering Stability>

As an index of cornering characteristics of a tire which is dominant over steering characteristics of a vehicle, CP (cornering power) measured using a flat-belt type testing machine was evaluated. Each sample tire was assembled with a rim of 8.5J-20, and with filling internal pressure of a tire of 260 kPa, load mass of 5.0 kN, and speed of 80 km/h, tires were rolled using a flat-belt type testing machine and slip angles of ± 0 degrees, 0.5 degrees, and 1 degree were applied to measure the stress generated at the tire, and the inclination at 0 degrees (kgf/deg) was obtained. With CP of 1.5 kN/deg or more, steering stability is considered sufficient.

### <Side Cut Resistance>

Each sample tire was assembled with a rim of 8.5J-20, applied with pressure until the internal pressure reached 260 MPa, and using a pendulum tester with a striker shape R (radius of striking surface) of 50 mm, pendulum length L of 1830 mm (6 ft), pendulum weight M of 60.55 kg shown in FIG. 5, a pendulum was struck on the sample tires with a swing-up angle θ of 90 degrees. The SA angle/ CA angle (SA angle: slip angle (angle of tire equatorial plane and pendulum moving surface), CA angle: camber angle (angle formed between the tire face and a surface perpendicular to the ground)) was 0 degrees/5 degrees. For each tire, the presence and absence of breakage was examined.

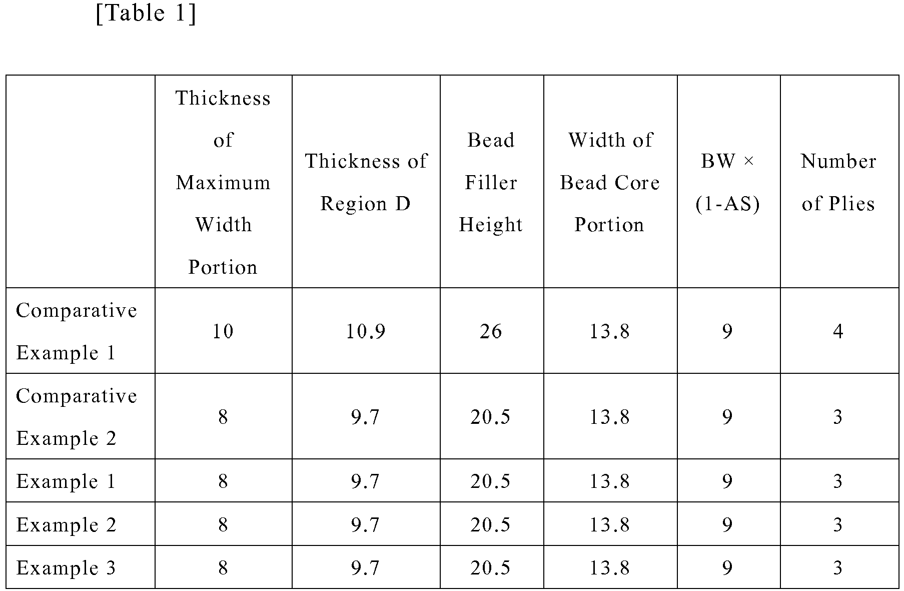

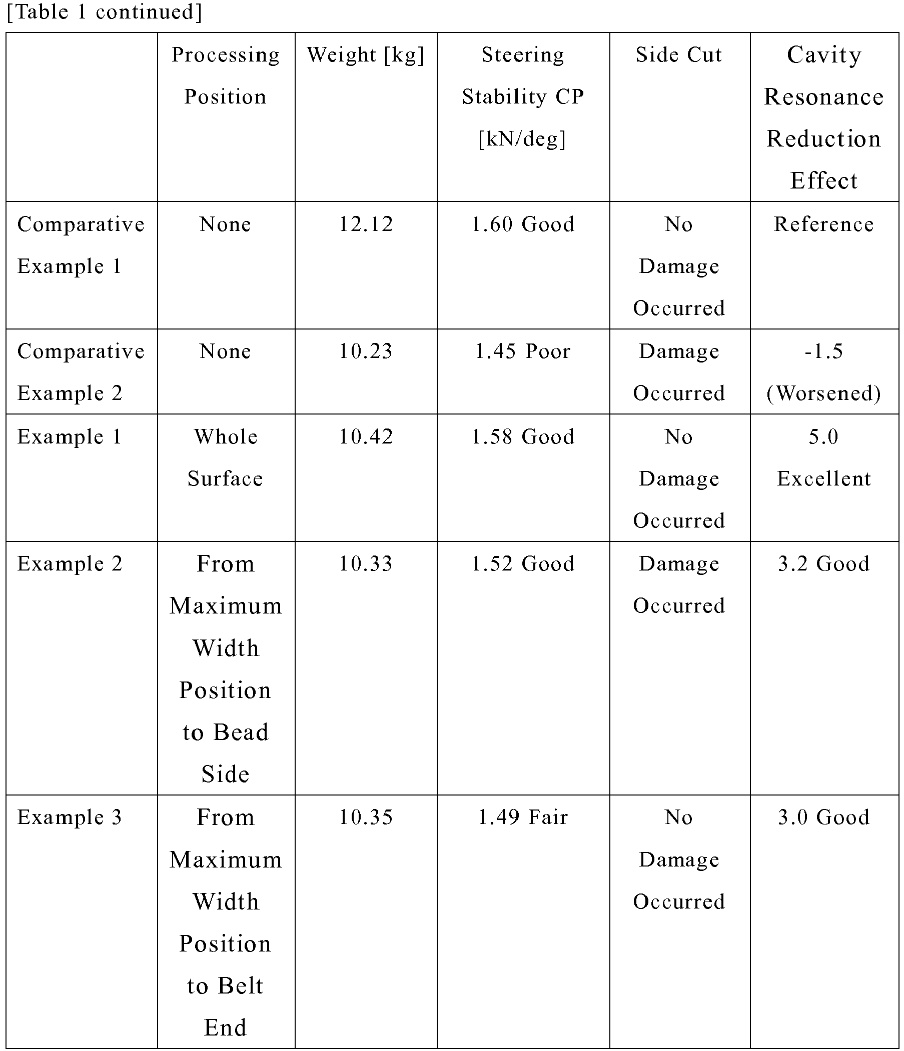

Regarding the peak observed in the vicinity of 210 Hz in FIG. 4, in the tires of examples 1 to 3, a large effect of reduction of 3 dB to 5 dB from comparative example 1 was obtained. Further, compared to the weight reduced tire of comparative example 2, despite the fact that examples 1 to 3 weigh substantially the same as comparative example 2, both steering stability and side cut resistance were improved in example 1, steering stability was improved in example 2, and side cut resistance was improved in example 3.

### REFERENCE SIGNS LIST

- 1: Bead portion,
- 1A: Inner side end in tire radial direction of bead portion
- 2: Sidewall portion
- 3: Tread portion
- 4: Carcass
- 5: Belt
- 6: Belt reinforcing layer
- 7: Bead core
- 8: Bead filler
- 9: Inner liner
- 10: Short fiber
- 11: Sidewall portion maximum width position
- MW: Maximum width of sidewall portion
- BW: Width of bead core portion
- BH: Bead filler height
- E: Tire equatorial plane
- U: Region from sidewall portion maximum width position to outer end in tire radial direction of bead core
- D: Region from sidewall portion maximum width position to outer end in width direction of belt

## Claims

1. A pneumatic tire having an aspect ratio AS of 55 % or less, wherein
short fibers (10) are fixed to a region of a tire inner peripheral surface including, at least in a part thereof, a position of the tire inner peripheral surface corresponding to a sidewall portion maximum width position (11), and **characterized in that**:
a tire thickness (MW) in the sidewall portion maximum width position (11) is BW × (1 - AS) or less in a relation between bead core width BW and the aspect ratio AS.

2. The pneumatic tire according to claim 1, wherein
the short fibers (10) are fixed to at least a part of a region (U) of a tire inner peripheral surface from the position of the tire inner peripheral surface corresponding to the sidewall portion maximum width position to the outer side end in tire radial direction of the bead core, the tire further comprising a bead filler, the bead filler height (BH) being 25 mm or less.

3. The pneumatic tire according to claim 1 comprising, in a tread portion (3), a belt (5) consisting of one or more belt layers (6), wherein
the short fibers (10) are fixed to at least a part of a region (D) from the sidewall portion maximum width position to the outer side end in the tire width direction of the belt, and
the minimum tire thickness in said region (D) is 10 mm or less.

## Patentansprüche

1. Luftreifen, der ein Seitenverhältnis AS von 55 % oder weniger hat, wobei
kurze Fasern (10) an einem Bereich einer Reifen-Innenumfangsfläche angeordnet sind, der, wenigstens in einem Teil desselben, eine Position der Reifen-Innenumfangsfläche umfasst, die einer Position (11) maximaler Breite eines Seitenwandabschnitts entspricht, und **dadurch gekennzeichnet, dass**
eine Reifendicke (MW) in der Position (11) maximaler Breite des Seitenwandabschnitts BW × (1 - AS) oder weniger in einer Beziehung zwischen einer Wulstkernbreite BW und dem Seitenverhältnis AS beträgt.

2. Luftreifen nach Anspruch 1, wobei
die kurzen Fasern (10) an wenigstens einem Teil eines Bereichs (U) einer Reifen-Innenumfangsfläche von der Position der Reifen-Innenumfangsfläche, die der Position (11) maximaler Breite des Seitenwandabschnitts entspricht, bis zu dem Außenseitenende des Wulstkerns in der Reifenradialrichtung befestigt sind, wobei der Reifen ferner einen Kernreiter umfasst, wobei die Kernreiterhöhe (BH) 25 mm oder weniger beträgt.

3. Luftreifen nach Anspruch 1, der, in einem Laufflächenabschnitt (3), einen Gürtel (5) umfasst, der aus einer oder mehreren Gürtellagen (6) besteht, wobei
die kurzen Fasern (10) an wenigstens einem Teil eines Bereichs (D) von der Position maximaler Breite des Seitenwandabschnitts bis zu dem Außenseitenende des Gürtels in der Reifenradialrichtung befestigt sind und die minimale Reifendicke in dem Bereich (D) 10 mm oder weniger beträgt.

## Revendications

1. Bandage pneumatique ayant un rapport d'aspect AS de 55 % ou moins, dans lequel des fibres courtes (10) sont fixées à une région d'une surface périphérique intérieure du bandage pneumatique incluant, au moins dans une partie de celle-ci, une position de la surface périphérique intérieure du bandage pneumatique correspondant à une position de largeur maximale de portion de flanc (11), et **caractérisé en ce que** :
l'épaisseur du bandage pneumatique (MW) dans la position de largeur maximale (11) de portion de flanc est égale à BW x (1 - AS) ou moins dans une relation entre la largeur de tringle de talon BW et le rapport d'aspect AS.

2. Bandage pneumatique selon la revendication 1, dans lequel
les fibres courtes (10) sont fixées à au moins une partie d'une région (U) d'une surface périphérique intérieure de bandage pneumatique, de la position de la surface périphérique intérieure du bandage pneumatique correspondant à la position de largeur maximale de portion de flanc jusqu'à l'extrémité latérale extérieure dans la direction radiale de la tringle de talon, le bandage pneumatique comprenant en outre une matière de bourrage de talon, et la hauteur de la matière de bourrage de talon (BH) étant de 25 mm ou moins.

3. Bandage pneumatique selon la revendication 1 comprenant, dans une portion de bande de roulement (3), une ceinture (5) composée d'une ou plusieurs couches de ceinture (6), dans lequel
les fibres courtes (10) sont fixées à au moins une partie d'une région (D) de la position de largeur maximale de portion de flanc jusqu'à l'extrémité latérale extérieure dans la direction de largeur du bandage pneumatique de la ceinture, et l'épaisseur minimale du bandage pneumatique dans ladite région (D) est de 10 mm ou moins.
